# EUROPÄISCHE PATENTSCHRIFT

(11) **EP 2 285 336 B1**
(45) Veröffentlichungstag und Bekanntmachung des Hinweises auf die Patenterteilung: **17.07.2013**
(21) Anmeldenummer: 09749584.0
(22) Anmeldetag: 14.05.2009
(51) Int. Cl.: A61J 1/03, B32B 15/08, B32B 27/06, B65D 81/26, B32B 27/18, B65D 75/36

(54) **BLISTER UND VERPACKUNGS-PACKGUT-EINHEIT**
BLISTER AND PACKAGE/PACKED PRODUCT UNIT
UN BLISTER ET UN ENSEMBLE CONSTITUÉ D'UN EMBALLAGE ET D'UN PRODUIT EMBALLÉ

(30) Priorität: 19.05.2008 DE 102008024137
(43) Veröffentlichungstag der Anmeldung: 23.02.2011
(73) Patentinhaber: Amcor Flexibles Kreuzlingen Ltd., 8280 Kreuzlingen (CH)
(72) Erfinder: YILDIRIM, Selcuk, CH-8048 Zürich (CH); JAMMET, Jean-Claude, CH-8212 Neuhausen (CH); PASBRIG, Erwin, 78224 Singen (DE)
(74) Vertreter: Gernet, Samuel Andreas
(86) Internationale Anmeldenummer: PCT/EP2009/003438
(87) Internationale Veröffentlichungsnummer: WO 2009/141094

(56) Entgegenhaltungen:
- EP-A2- 0 794 053
- WO-A1-2005/108063
- WO-A1-2007/051860
- WO-A1-2007/104344
- US-A- 5 274 024
- US-A1- 2002 081 358

## Beschreibung

Die Erfindung betrifft eine Blisterverpackung nach Anspruch 1 sowie eine Verpackungs-Packgut-Einheit.

Es ist bekannt, dass Sauerstoff den Verderb von Lebensmitteln beschleunigen und zu Funktionsstörungen anderer Produkte, insbesondere pharmazeutischer oder kosmetischer Produkte, beitragen kann. Sauerstoff wirkt zum einen direkt oxidativ auf bestimmte Produktbestandteile und ermöglicht darüber hinaus in vielen Fällen das Wachstum aerober Mikroorganismen.

Um die negativen Folgen einer Sauerstoff-Einwirkung auf das Packgut zu verhindern, ist es bekannt, Verpackungsfolien mit einer so genannten Sauerstoff--zehrenden-Schicht (Sauerstoff-Scavenger-Schicht) auszustatten. Die Funktion von in einer derartigen Schicht zum Einsatz kommenden Scavengern besteht zum einen darin, einen Restsauerstoffgehalt, der beim Verpacken des Packguts im Kopfraum verbleibt sowie den im Packgut gelösten Sauerstoff in möglichst kurzer Zeit zu eliminieren. Darüber hinaus besteht die Aufgabe von Sauerstoff-Scavengern darin den durch die Verpackung permeierenden Sauerstoff aufzunehmen und hierdurch die Haltbarkeit von oxidationsempfindlichem Packgut zu verlängern.

EP-A-1 733 872 beschreibt eine Verpackungsfolie für Blister mit einer coextrudierten Absorberschicht.

Aus der WO 2007/051860 A1 ist ein Lackmaterial zum Herstellen einer Sauerstoff-zehrenden-Schicht bekannt, wobei das Lackmaterial eine Matrix aus teilweise organischen Polymeren umfasst sowie eine Komponente (Scavenger), die nach geeigneter Triggerung sauerstoffzehrend ist.

Die WO 2005/108063 beschreibt ein schichtförmiges Material zur Verpackung, insbesondere zum Tiefziehen zu Blisterverpackungen, wobei das Material mit einer Gasbarriereschicht basierend auf EVOH, einer Haftmittelschicht und einer Sauerstoffabsorberschicht ausgestattet ist.

Ein Sauerstoff absorbierendes Harz, welches beispielhaft über einen Kleber an eine Metallfolie geklebt ist und auf dem Harz, ebenfalls mittels eines Klebers, eine innere Schicht angebracht ist, nennt US 5,274,023.

Aus der EP 0 794 053 ist ein Gegenstand aus einer Schicht einer Sauerstoffbarriere, einer Sauerstoff zehrenden Schicht und einem Absorber für Zusatzstoffe bekannt.

Gemäss US 2002/0081358 werden Schichtstoffe mit einer strukturellen Feuchtebarriere, einer Sauerstoffbarriere, einer Sauerstoff zehrenden Schicht und einer Sauerstoff durchlässigen Schicht vorgeschlagen.

Ein Blisterbodenunterteil, d.h. den mit Vertiefungen verformten Bodenteil einer Verpackung, jedoch nicht eine Deckelfolie, wird in WO 2007/104344 beschrieben.

Schwierigkeiten bereitet in der Praxis die Herstellung einer Packungsfolie unter Einsatz eines derartigen Lackmaterials, da es immer wieder zu Delaminationserscheinungen kommt. Darüber hinaus scheint die Sauerstoffbindungskapazität einer derartigen Sauerstoff-zehrende-Schicht aufweisenden Verpackungsfolie verbesserungswürdig.

Der Erfindung liegt daher die Aufgabe zugrunde, eine robuste und langlebige, für den Praxiseinatz geeignete, eine Sauerstoff-zehrende-Schicht umfassende Verpackungsfolie für eine Blisterverpackung vorzuschlagen. Vorzugsweise soll die Sauerstoffbindungskapazität der Verpackungsfollie optimiert sein. Ferner besteht die Aufgabe darin, eine entsprechend optimierte Verpackung sowie eine entsprechend optimierte Verpackungs-Packgut-Einheit vorzuschlagen.

Hinsichtlich der Blisterverpackung wird die Aufgabe durch eine Verpackung mit den Merkmalen von Anspruch 1 gelöst.

Hinsichtlich der Verpackungs-Packgut-Einheit wird die Aufgabe durch eine Einheit mit den Merkmalen von Anspruch 8 gelost.

Der Erfindung liegt der Gedanke zugrunde, eine Schichtanordnung mit einer gegenüber Sauerstoff wirksamen Barriereschicht, insbesondere einer aluminiumhaltigen Schicht vorzusehen, wobei die Barriereschicht die Aufgabe hat, die Permeation von Sauerstoff von der Umgebung in das Packungsinnenvolumen zum Packgut zu verhindern, zumindest jedoch zu minimieren, mit der Folge, dass eine ebenfalls in der Schichtanordnung vorgesehene Sauerstoff-zehrende-Schicht (Sauerstoff-Scavanger-Schicht) über einen möglichst langen Zeitraum funktionstüchtig, d.h. sauerstoffzehrend bleibt. Dabei ist es bevorzugt, die Sauerstoff-zehrende-Schicht auf der dem Packgut zugewandten Seite der Barriereschicht anzuordnen. um Delaminationserscheinungen zu minimieren und in der Folge eine für den Praxiseinsatz geeignete, robuste Verpackungsfolie zu erhalten, ist bei einer nach dem Konzept der Erfindung ausgebildeten Verpackungsfolievorgesehen, dass die Barriereschicht und die Sauerstoff-zehrende-Schicht eine Haftverbesserungsschicht sandwichartig zwischen sich aufnehmen. Anders ausgedrückt stellt die Haftverbesserungsschicht das Bindeglied gegenüber der Sauerstoff wirksamen Barriereschicht und der, mindestens eine Sauerstoff-zehrenden-Komponente (Scavenger) aufweisende, Sauerstoff-zehrenden-Schicht dar. Überraschenderweise wird durch den Einsatz der Haftverbesserungsschicht zwischen der Barriereschicht und der Sauerstoff-zehrenden-Schicht nicht nur die Robustheit der Verpackungsfolie erhöht - sondern die Verpackungsfolie erhält im Vergleich zu einer Verpackungsfolie ohne Haftverbesserungsschicht wesentlich verbesserte, Sauerstoff-eliminierende (zehrende) Eigenschaften (Synergie-Effekt). So konnte in Versuchen nachgewiesen werden, dass die Sauerstoffaufnahmekapazität einer Verpackungsfolie durch den Einsatz einer Haftverbesserungsschicht von 108 cm³O₂/g auf 119 cm³O₂/g, also um etwa 10 %, verbessert wurde. Dabei bezieht sich die Gewichtsangabe in Gramm [g] auf die Sauerstoff-zehrende-Schicht. Durch diesen überraschenden Zusatzeffekt können mit einer nach dem Konzept der Erfindung ausgebildeten Verpackungsfolie verpackte Produkte länger gelagert werden, ohne dass die Produkteigenschaften hierdurch negativ beeinflusst werden.

Die Sauerstoff-zehrende-Schicht ist aus einem Lackmaterial gebildet. Dabei kann das Lackmaterial auf unterschiedlichste Art und Weise auf die Haftverbesserungsschicht aufgebracht werden. So ist es denkbar, das Lackmaterial auf die Sauerstoff-zehrende-Schicht aufzudrucken oder alternativ, beispielsweise mittels eines Lackmaterialvorhangs aufzugießen, aufzusprühen, aufzurakeln, auf zupinseln, etc.

In Weiterbildung der Erfindung ist mit Vorteil vorgesehen, dass das Lackmaterial, wie in der WO 2007/051860 A1 offenbart ausgebildet ist. Im Hinblick auf mögliche Ausführungsformen des Lackmaterials soll daher die WO 2007/051860 A1. als zum Offenbarungsgehalt der vorliegenden Anmeldung zugehörig offenbart gelten, insbesondere mit der Folge, dass mindestens ein beliebiges Merkmal der vorliegenden Anmeldung mit mindestens einem beliebigen Merkmal der WO 2007/0518060 A1 kombinierbar und beanspruchbar sein soll. Besonders bevorzugt ist es dabei, die Matrix unter Verwendung mindestens eines Silans herzustellen das eine einer organischen Polymerisationa-, Additions- oder Kondensationsreaktion zugängliche Gruppe, besonders bevorzugt eine Vinyl-, eine Allyl-, eine (Meth-) Acryl oder eine Glycidylgruppe enthält. Zusätzlich oder alternativ kann die Matrix unter Verwendung eines Metallalkoxids hergestellt sein, das vorzugsweise unter Alkoxiden des Aluminiums, Zirkons, Titans oder Zinns ausgewählt ist. Darüber hinaus umfasst das Lackmaterial bevorzugt eine Komponente, ausgewählt unter Komponenten, die nach geeigneter Triggerung, insbesondere aktinischer Bestrahlung, sauerstoffzehrend ist. Bevorzugt ist die Sauerstoff-zehrende-Komponente kovalent in die Matrix eingebunden. Besonders bevorzugt ist es, wenn die Sauerstoff-zehrende-Komponente ein silangebundener Rest ist, wobei es weiter bevorzugt ist, wenn die Sauerstoff-zehrende- Komponente ein organischer Rest ist, der ein zyklischen Olefin enthalt. Besonders bevorzugt erfolgt die Triggerung mit Hilfe von aktinischer Strahlung, vorzugsweise in Gegenwart eines Photosensitizers.

Im Hinblick auf die Ausbildung der Haftverbesserungsschicht gibt es unterschiedliche Möglichkeiten. So ist es denkbar, dass die Haftverbesserungsschicht durch eine Oberflächenbehandlung der Barriereschicht unmittelbar an der Barriereschicht hergestellt wird. Zusätzlich oder alternativ kann die Haftschicht als separate Schicht auf die Barriereschicht aufgebracht, insbesondere aufgedruckt oder auflaminiert werden. Besonders bevorzugt ist eine Ausführungsform, bei der die Haftverbesserungsschicht als Polyurethanprimerschicht und/oder als Acrylharzprimerschicht und/oder als Ethylenacrysäurepolymerschicht ausgebildet ist. Besonders bevorzugt handelt es sich dabei um eine extrusionsbeschichtete Polymerschicht. Zusätzlich oder alternativ kann die Haftverbesserungsschicht als Ionomerharzschicht, beispielsweise Surlyn® von DuPont ausgebildet sein. Eine weitere Möglichkeit zur Ausbildung der Haftverbesserungsschicht besteht darin, die Haftverbesserungsschicht durch eine Plasmabehandlung oder eine Coronbehandlung der Barriereschicht herzustellen. Zusätzlich oder alternativ ist es denkbar, die Haftverbesserungsschicht als PVD-Schicht (physical vacuum deposition-Schicht) und/oder als Sol-Gel-Schicht auszubilden. Eine PVD-Schicht kann beispielsweise durch Elektronenstrahlverdampfen oder Widerstandsheizen oder induktivem Heizen von zu verdampfenden Materialien, d.h. entsprechenden Targetmaterialien als SiOx, wobei x eine zahl von 1,1 bis 2,0 bedeutet, oder als Al2O3-Schicht hergestellt werden. Bei einer Sol-Gel-Schicht handelt es sich vorzugsweise um eine Beschichtung aus einem vernetzbaren organofunktionellen Silan, die mit einer Metallverbindung, beispielsweise durch hydrolytische Kondensation, gegebenenfalls in Gegenwart eines Kondensationskatalysators, erhalten wird. Fallweise können nicht vernetzbare organofunktionelle Silane und gegebenenfalls eines oder mehrere schwerflüchtige oxide enthalten sein. Dem hydrolytischen Kondensat wird ein organisches Präpolymer zugegeben. Die so erhaltene Beschichtungslösung kann auf ein Substrat aufgebracht und anschließen ausgehärtet werden. Durch den Prozess wird ein organisches Netzwerk aufgebaut und über entsprechend derivatisierte Kieselsäure-Ester können zusätzlich organische Gruppen eingebaut werden, die einerseits zur Funktionalisierung und andererseits zur Ausbildung definierter organischer Polymersysteme genutzt werden. Weitere, teilweise schon genannte Möglichkeiten zur Ausbildung der Haftverbesserungsschicht bestehen darin, die Haftverbesserungsschicht auf Copolymer Acrylat Basis, vorzugsweise als Beschichtung, und/oder auf Copolymer Ethylen-Acrylsäure Basis, vorzugsweise als Beschichtung, und/oder auf Cellulosenitrat Basis, vorzugsweise als Lack, und/oder auf Polyester Basis, vorzugsweise als Lack, und/oder auf Basis von Co-Polypropylen; auf Basis von gepfropftem Maleinsäureanhydrid, vorzugsweise als Lack, und/oder auf PVC Basis, vorzugsweise als Film, und/oder auf Butadien Styrol Basis, vorzugsweise als Lack, und/oder auf Surlyn Basis, vorzugsweise als Beschichtung, und/oder auf Polyethylen Basis, vorzugsweise als Beschichtung, und/oder auf Polyurethan Basis, vorzugsweise als Lack, und/oder auf Polyester Basis, vorzugsweise als Film oder Lack, auszubilden.

Die Schichtanordnung weist zusätzlich zu den drei zuvor beschriebenen Schichten eine, vorzugsweise an die Sauerstoff-zehrende-Schicht angrenzende, siegelfähige Schicht (Siegelschicht) auf. Überraschenderweise kommt es durch das Vorsehen einer derartigen Siegelschicht zu einem synergistischen Effekt, der die Sauerstoff-Aufnahmekapazität der Verpackungsfolie weiter erhöht. Bevorzugt dient die Siegelschicht zum Siegeln der Verpackungsfolie entweder mit sich selbst oder mit einem weiteren Verpackungsbestandteil, insbesondere einer weiteren Verpackungsfolie, die bei Bedarf wie die zuvor beschriebene Verpackungsfolie ausgebildet sein kann.

Zur Vermeidung von Delaminationseffekten kann es vorteilhaft sein, zwischen der Sauerstoff-zehrenden-Schicht und der Siegelschicht eine Haftverbesserungsschicht vorzusehen, die vorzugsweise unmittelbar an die vorgenannte Schicht angrenzt. Dabei kann die Haftverbesserungsschicht auf Basis der zuvor im Zusammenhang mit der Haftverbesserungssicht zwischen der Barriereschicht und der Sauerstoff-zehrenden-Schicht offenbarten chemischen Verbindungen gebildet sein. Bei einer Schichtanordnung Aluminium (Barriereschicht) - Haftverbesserungsschicht - Sauerstoff-zehrende-Schicht - Haftverbesserungsschicht - Siegelschicht konnte im Vergleich zu einer Schichtanordnung ohne Siegelsicht und ohne zusätzliche Haftverbesserungsschicht eine Steigung der Sauerstoffaufnahmekapazität um etwa 41% auf 152 cm³O₂/g erzielt werden, wobei sich die Gewichtsangabe in Gramm [g] auf die Sauerstoff-zehrende-Schicht bezieht.

Die Barriereschicht ist zur Optimierung der Barriereeigenschaften im Hinblick auf Sauerstoff als Metallschicht ausgebildet. Besonders bevorzugt handelt es sich dabei um eine aluminiumhaltige Schicht, zweckmäßig eine Aluminiumschicht, vorzugsweise um eine Aluminiumfolie bestehend aus Aluminium oder einer Aluminiumlegierung. Alternativ kann die Barriereschicht auf Stahlbasis ausgebildet werden.

Die an die sauerstoff-zehrende-Schicht angrenzende separate Siegelschicht hat bevorzugt unmittelbaren Verpackungsinnenvolumen- bzw. Packgutkontakt.

Im Hinblick auf die Ausbildung der Bodenfolie gibt es unterschiedliche Möglichkeiten - so kann diese, wie zuvor erläutert, als eine nach dem Konzept der Erfindung ausgebildete Verpackungsfolie ausgebildet sein. Alternativ ist es möglich, die Bodenfolie als Mehrschichtfolie, umfassend eine gegenüber Sauerstoff wirksame Barriereschicht und/oder eine PVC-Schicht und/oder eine Ortho-Phthaldialdehyt-Schicht (oPA-Schicht) umfassen, bevorzugt in der zuvor erwähnten Reihenfolge.

Die Erfindung führt auch auf eine Verpackungs-Packgut-Einheit. Diese zeichnet sich durch mindestens ein in einer zuvor beschriebenen Verpackung verpacktes pharmazeutisches Produkt aus.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: in einer schematischen Darstellung ein Ausführungsbeispiel einer Verpackungsfolie ohne separate Siegelschicht, welche nicht Bestandteil einer erfindungsgemässen Blisterverpackung ist;
- Fig. 2:: ein Ausführungsbeispiel einer Verpackungsfolie mit einer an eine Sauerstoff-zehrende-Schicht angrenzenden Siegelschicht zur Verwendung in einer erfindungsgemässen Blisterverpackung, und
- Fig. 3:: eine mit einer Verpackungsfolie hergestellte, als Blisterverpackung ausgebildete Verpackung, wobei die verpackungsfolie die Deckfolie der Blisterverpackung bildet.

In den Figuren sind gleiche Elemente und Elemente mit der gleichen Funktion mit den gleichen Bezugszeichen gekennzeichnet.

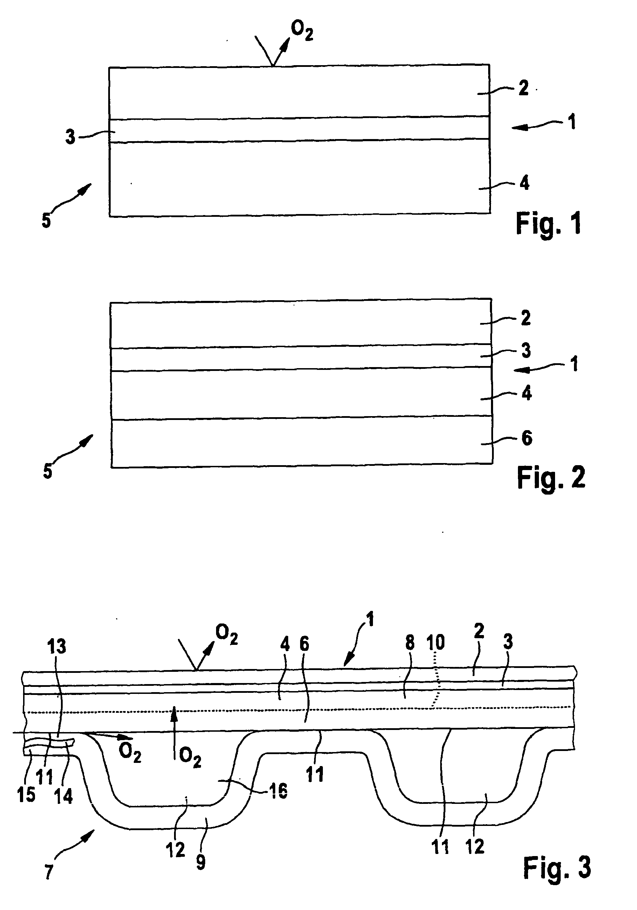

In Fig. 1 ist eine Verpackungsfolie 1 gezeigt. Diese umfasst eine in der zeichnungsebene obere, äußere Barriereschicht 2 aus Aluminium, die die Permeation von Sauerstoff von der Außenseite her verhindert. Unmittelbar benachbart zur Barriereschicht 2 ist eine parallel zur Barriereschicht 2 angeordnete Haftverbesserungsschicht 3 angeordnet, wobei die Haftverbesserungsschicht 3 entweder durch eine Behandlung der Barriereschicht 2 oder durch das Aufbringen einer separaten Schicht auf die Barriereschicht 2 hergestellt sein kann. Unmittelbar an die Haftverbesserungsschicht 3 grenzt eine Sauerstoff-zehrende-Schicht 4, also eine Sauerstoff-Scavenger-Schicht 4 an, die die Aufgabe hat, den in einem Packungsinnenvolumen befindlichen Sauerstoff sowie in das Verpackungsinnenvolumen eindringenden Sauerstoff zu eliminieren, insbesondere zu binden. Besonders bevorzugt ist die Sauerstoff-zehrende-Schicht wie in einem der in der WO 2007/051860 A1 beschriebenen Beispiele ausgebildet.

Die verpackungsfolie 1 besteht bei dem Ausführungsbeispiel gemäß Fig. 1 also aus einer Schichtanordnung 5, umfassend die äußere Barriereschicht, die daran angrenzende, parallel zur Barriereschicht 2 verlaufende Haftverbesserungsschicht 3 sowie die an diese angrenzende, parallel zur Haftverbesserungsschicht 3 verlaufende Sauerstoff-zehrende-Schicht 4, die bei einer mit der Verpackungsfolie 1 hergestellten Verpackung bevorzugt unmittelbar dem Packgut zugewandt ist. Die Schichtanordnung 5 ist also sandwichartig aufgebaut, wobei die Barriereschicht 2 und die Sauerstoff-zehrende-Schicht 4 die Haftverbesserungsschicht 3 zwischen sich aufnehmen.

In Fig. 2 ist eine für eine erfindungagemässe Blisterverpackung verwendbare Verpackungsfolie 1 gezeigt. Die Schichtanordnung der Verpackungsfolie 1 umfasst neben den in Fig. 1 gezeigten und zuvor beschriebenen Schichten eine siegelfähige siegelschicht 6, die unmittelbar an die Sauerstoff-zehrende-Schicht 4 angrenzt. Es ist auch eine Ausführungsform realisierbar, bei der zwischen der Sauerstoff-zehrenden-Schicht 4 und der Siegelschicht 6 eine weitere Haftverbesserungsschicht zur Verbesserung der Haftung der Siegelschicht 6 bzw. der Sauerstoff-zehrenden-Schicht 4 angeordnet ist. In dem gezeigten Ausführmgsbeispiel wurde auf das Vorsehen einer derartigen weiteren Haftverbesserungsschicht bewusst verzichtet.

In Fig. 3 ist eine als Blisterverpackung ausgebildete Verpackung 7 gezeigt. Diese besteht aus einer Deckfolie 8, die mit einer Bodenfolie 9 versiegelt ist. Die Deckfolie 8 kann dabei beispielsweise wie in Fig. 2 gezeigt ausgebildet sein. Zu erkennen ist die äußere, aluminiumhaltige Barriereschicht, die dazu unmittelbar benachbarte Haftverbesserungsschicht 3 und die an diese angrenzende Sauerstoff-zehrende-Schicht 4, an die die Siegelschicht 6 angrenzt, mit deren Hilfe die Deckfolie 8 (Vergackungsfolie 1) mit der Bodenfolie 9 gesiegelt ist, und zwar in Randbereichen 11 außerhalb von in die Bodenfolie 9 eingeformten Kavitäten 12 zur Aufnahme von nicht dargestelltem pharmazeutischen Produkten oder Kosmetikprodukten.

In dem gezeigten Ausführungsbeispiel ist die Bodenfolie 9 als dreischichtige Folie ausgebildet, was in der Zeichnungsebene links angedeutet ist. Die Bodenfolie 9 besteht aus einer inneren, dem Packgut zugewandten PVC-Schicht 13. An deren Außenseite grenzt unmittelbar eine Aluminiumschicht 14 als Barriereschicht an, die außen überdeckt ist von einer oPA-Schicht 15.

In Fig. 3 ist über Pfeile angedeutet, dass Sauerstoff (O₂) von außen die Verpackungsfolie 1 (Deckfolie 8) nicht durchdringen kann (aufgrund der Wirkung der Barriereschicht 2). Ferner ist zu erkennen, dass im Verpackungsinnenvolumen 16 bzw. im Packgut gelöster Sauerstoff gegebenenfalls durch die Siegelschicht zur Sauerstoff-zehrenden-Schicht 4 vordringen kann und dort gebunden wird. Diesen Weg nimmt auch der gegebenenfalls durch eine Siegelnaht zwischen der Deckfolie 8 und der Bodenfolie 9 in den Verpackungsinnenraum 16 permeierende Sauerstoff.

## Patentansprüche

1. Pharmazeutische oder kosmetische Verpackung als Blisterverpackung (7), wobei die Blisterverpackung (7) eine mit einer Bodenfolie (9) versiegelte Deckfolie (8) aus einer Verpackungsfolie (1) umfasst, die verpackungsfolie (1) umfassend eine oder bestehend aus einer Schichtanordnung (5), mit einer einen Sauerstoffdurchtritt verhindernden Barriereschicht (2), wobei die Barriereschicht (2) als Metallschicht ausgebildet ist, einer an die Barriereschicht (2) angrenzenden Haftverbesserungsschicht (3), einer an die Haftverbesserungsschicht (3) angrenzenden Sauerstoff-zehrenden-Schicht (4) und eine an die Sauerstoff-zehrende-Schicht (4) angrenzende Siegelschicht (6), **dadurch gekennzeichnet, dass** die Sauerstoff-zehrende-Schicht (4) aus einem Lackmaterial gebildet ist.

2. Verpackung nach Anspruch 1,
**dadurch gekennzeichnet,**
**dass** das Lackmaterial eine Matrix aus zumindest teilweise organischen Polymeren, aus anorganischenorganischen Hybridpolymeren, sowie mindestens eine Komponente umfasst, ausgewählt unter Komponente, die nach geeigneter Triggerung durch Bestrahlung, gegenüber Sauerstoff sauerstoffzehrend sind.

3. Verpackung nach einem der vorhergehenden Ansprüchen,
**dadurch gekennzeichnet,**
**dass** die Haftverbesserungsschicht (3) ausgewählt ist aus der Gruppe bestehend aus einer Polyurethanprimerschicht, einer Acrylharzprimerschicht, einer Ethylenacrylsäurepolymerschicht, einer, insbesondere extrusionsbeschichteten, Polymerschicht, einer Ionomerharzschicht, einer Plasmabehandlungsschicht, einer Coronbehandlungsschicht, einer PVD-Schicht, einer CVD-Schicht, einer Sol/Gel-Schicht.

4. Verpackung nach Anspruch 1,
**dadurch gekennzeichnet, dass**
zwischen der Siegelschicht (6) und der Sauerstoff-zehrenden-Schicht (4) eine Haftverbesserungsschicht vorgesehen ist.

5. Verpackung nach wenigstens einem der vorhergehenden Ansprüche,
**dadurch gekennzeichnet,**
**dass** die Barriereschicht (2) als aluminiumhaltige Schicht, zweckmäßig als Altiminiumschicht (14), vorteilhaft als Aluminiumfolie, ausgebildet ist.

6. Verpackung nach Anspruch 1,
**dadurch gekennzeichnet, dass** die Blisterverpackung mit einer, von der Verpackungsfolie (1) gebildeten, Deckfolie (8) ausgebildet ist, die mit einer Kavitäten (12) aufweisenden, von der Verpackungsfolie (1) gebildeten, Bodenfolie (9), die Kavitäten (12) verschließende versiegelt ist.

7. Verpackung nach Anspruch 1,
**dadurch gekennzeichnet,**
**dass** die Bodenfolie (9) als Mehrschichtfolie ausgebildet ist, umfassend eine Barriereschicht (2) und/oder eine PVC-Schicht (13) und/oder eine oPA-Schicht (15).

8. Verpackungs-Packgut-Einheit, mit in einer Verpackung (7) nach einem der Ansprüche 1 bis 7 verpacktem Packgut, mit mindestens einem pharmazeutischen Produkt.

## Claims

1. Pharmaceutical or cosmetic packaging as a blister pack (7), the blister pack (7) comprising a cover film (8) which consists of a packaging film (1) and is sealed to a base film (9), the packaging film (1) comprising or consisting of a layer arrangement (5), comprising a barrier layer (2) preventing oxygen penetration, the barrier layer (2) being formed as a metal layer, an adhesion improvement layer (3) adjacent to the barrier layer (2), an oxygen scavenger layer (4) adjacent to the adhesion improvement layer (3) and a sealing layer (6) adjacent to the oxygen scavenger layer (4), **characterised in that** the oxygen scavenger layer (4) is formed from a lacquer material.

2. Packaging according to claim 1, **characterised in that** the lacquer material comprises a matrix of at least partly organic polymers, of inorganic-organic hybrid polymers and at least one component selected from components which, after suitable triggering by radiation, scavenge oxygen.

3. Packaging according to either of the preceding claims, **characterised in that** the adhesion improvement layer (3) is selected from the group consisting of a polyurethane primer layer, an acrylic resin primer layer, an ethylene acrylic acid polymer layer, an in particular extrusion-coated polymer layer, an ionomer resin layer, a plasma treatment layer, a corona treatment layer, a PVD layer, a CVD layer, and a sol-gel layer.

4. Packaging according to claim 1, **characterised in that** an adhesion improvement layer is provided between the sealing layer (6) and the oxygen scavenger layer (4).

5. Packaging according to at least one of the preceding claims, **characterised in that** the barrier layer (2) is formed as an aluminium-containing layer, expediently as an aluminium layer (14), advantageously as an aluminium film.

6. Packaging according to claim 1, **characterised in that** the blister pack is formed with a cover film (8) which is formed by the packaging film (1) and which is sealed to a base film (9) which comprises cavities (12) and is formed by the packaging film (1), sealing the cavities (12).

7. Packaging according to claim 1, **characterised in that** the base film (9) is formed as a laminated film, comprising a barrier layer (2) and/or a PVC layer (13) and/or an oPA layer (15).

8. Packaging-packed product unit, comprising a packed product packed in a packaging (7) according to any of claims 1 to 7, comprising at least one pharmaceutical product.

## Revendications

1. Emballage pharmaceutique ou cosmétique en tant qu'emballage blister (7), l'emballage blister (7) comprenant une feuille de couverture (8) constituée d'une feuille d'emballage (1) scellée avec une feuille de fond (9), la feuille d'emballage (1) comprenant ou étant constituée d'une disposition en couches (5), avec une couche barrière (2) empêchant l'entrée d'oxygène, la couche barrière (2) étant formée comme une couche métallique, avec une couche d'amélioration de l'adhérence (3) adjacente à la couche barrière (2), une couche consommant de l'oxygène (4) adjacente à la couche d'amélioration de l'adhérence (3) et une couche de scellement (6) adjacente à la couche consommant de l'oxygène (4), **caractérisé en ce que** la couche consommant de l'oxygène (4) est constitué d'un matériau de vernis.

2. Emballage selon la revendication 1, **caractérisé en ce que** le matériau de vernis comprend une matrice constituée de polymères as moins partiellement organiques, de polymères hybrides inorganiques-organiques, ainsi qu'au moins un constituant choisi parmi des constituants qui sont consommateurs d'oxygène après un déclenchement approprié par irradiation.

3. Emballage selon l'une quelconque des revendications précédentes, **caractérisé en ce que** la couche d'amélioration de l'adhérence (3) est choisie dans le groupe constitué d'une couche primaire de polyuréthane, d'une couche primaire de résine acrylique, d'une couche polymère d'acide éthylèneacrylique, d'une couche polymère en particulier déposée par extrusion, d'une couche de résine ionomère, d'une couche de traitement au plasma, d'une couche de traitement corona, d'une couche PVD, d'une couche CVD, d'une couche sol/gel.

4. Emballage selon la revendication 1, **caractérisé en ce qu'**il est prévu entre la couche de scellement (6) et la couche consommant de l'oxygène (4) une couche d'amélioration de l'adhérence.

5. Emballage selon au moins l'une des revendications précédentes, **caractérisé en ce que** la couche barrière (2) est formée comme une couche contenant de l'aluminium, de manière appropriée comme une couche d'aluminium (14), de préférence comme une feuille d'aluminium.

6. Emballage selon la revendication 1, **caractérisé en ce que** l'emballage blister est formé d'une feuille de couverture (8) constituée de la feuille d'emballage (1), laquelle est scellée avec une feuille de fond (9) présentant des cavités (12), constituée de la feuille d'emballage (1) enfermant les cavités (12).

7. Emballage selon la revendication 1, **caractérisé en ce que** la feuille de fond (9) est formée comme une feuille multicouche comprenant une couche barrière (2) et/ou une couche de PVC (13) et/ou une couche d'oPA (15).

8. Unité d'emballage-matériau à emballer, avec un matériau à emballer emballé dans un emballage (7) selon l'une quelconque des revendications 1 à 7, avec au moins un produit pharmaceutique.
